Europäisches Patentamt

European Patent Office

Office européen des brevets

(19)

(11) Publication number: **0 146 976**
**B1**

(12) **EUROPEAN PATENT SPECIFICATION**

(45) Date of publication of patent specification: **27.04.88**

(21) Application number: **84201053.0**

(22) Date of filing: **12.07.84**

(51) Int. Cl.⁴: **F 23 D 14/10, F 24 H 1/43, F 23 D 14/40**

(54) A heating boiler having a vertical burner tube.

(30) Priority: **24.11.83 NL 8304041**

(43) Date of publication of application:
**03.07.85 Bulletin 85/27**

(45) Publication of the grant of the patent:
**27.04.88 Bulletin 88/17**

(84) Designated Contracting States:
**BE CH DE FR GB IT LI NL**

(56) References cited:
**DE-A-1 964 178**
**FR-A-2 506 910**
**NL-A-7 506 250**
**US-A-4 156 591**

(73) Proprietor: **Remeha Fabrieken B.V.**
**Kanaal Zuid 110**
**NL-7332 BD Apeldoorn (NL)**

(72) Inventor: **Krans, Peter**
**Evert Roelofsenlaan 26**
**NL-7339 DC Ugchelen (NL)**
Inventor: **Meuleman, Hermanus Johannes**
**Kaliumstraat 13**
**NL-7334 AW Apeldoorn (NL)**

(74) Representative: **Urbanus, Henricus Maria, Ir.**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a heating boiler having a vertical axis and including, arranged concentrically with said axis, a completely premixing burner tube having a lower circumferentially closed premixing portion, with an upper end and a lower end, and an upper portion provided with a plurality of burner ports extending through the tube wall, with inlets on the inside surface of the tube and outlets on the outside surface of the tube, the outside surface serving as a flame supporting surface; means for delivering a mixture of gaseous fuel and sufficient combustion air to burn the fuel completely to the lower portion of the burner tube; a helical water tube surrounding the burner tube; an enclosure surrounding the water tube and having a closed upper end; a flue gas discharge jacket surrounding and radially spaced from the enclosure; an annular bottom closure member mounted underneath the helical water tube and sealingly connected to both the flue gas discharge jacket and the lower portion of the burner tube; and means for guiding combusted fuel and air from the burner ports to the space between the enclosure and the flue gas discharge jacket.

In a similar boiler disclosed in NL—A—7506250 the burner tube comprises a lower tubular mixing portion closed all around, while the superimposed tube portion is provided with a plurality of small circular gas passages. Furthermore, the flue gas discharge jacket disposed around the helical tube comprises a plurality of flue gas discharge openings via which the hot flue gas flowing along the front screw winding is directly discharged.

It is an object of the invention not only to increase the efficiency of such a boiler, but moreover to reduce the chance of flame flashback or blow-off. Furthermore, a simple easily mountable construction is contemplated. Besides, it is the object to provide a heating boiler adapted or suitable to operate for a large range of loads in an optimal way.

To this effect the heating boiler according to the invention is characterized by the upper portion of the burner tube being an assembly of stacked alternately flat and radially corrugated annular discs forming said plurality of burner ports such that the inlet areas of said ports are smaller than the outlet areas, the disc having substantially equal inner and outer diameters, and the upper portion of the burner tube further including means for holding the stacked discs together and for attaching the stacked discs to the lower portion of the burner tube, the annular bottom closure member comprising a condensate trough having a drain outlet, a fuel nozzle mounted below said annular bottom closure member; and the connection between the annular bottom closure member and the lower portion of the burner tube comprising an upwardly extending passage coaxial with the vertical axis and tapering inwardly toward the lower end of the lower portion of the burner tube.

Due to the use of alternate flat and corrugated discs, there are formed burner ports, the cross-section of which increases outwardly, so that in an operating boiler the gas mixing speed will become lower when the ports are traversed from the inside outwards: this results in that the chance of flame flashback is considerably reduced. The flat discs ensure a stable flame, so that blow-off is counteracted.

It has been found furthermore that a separate mixing tube can be dispensed with, since the required proper mixing and hence a proper flame distribution already takes place, partly due to the resistance by the flat and corrugated discs. The boiler according to the invention has the additional substantial advantage that the temperature adjacent the outflow surface due to the large mass (as compared with prior art burner tubes) is low.

Further the provision of a condensate trough makes clear that the burner according to the invention is a condensing type of burner: in a condensing burner at least a portion of the water vapor formed as part of the products of combustion of the burner is condensed upon contact with the water tubes. A condensing burner is of course more efficient than a non-condensing burner because it recovers at least a portion of the latent heat of vaporization from the water formed as a combustion product. However, the greatest efficiency is achieved only if the mixture of fuel gas and air is essentially stoichiometric, since excess air will dilute the combustion products and lower the dewpoint temperature of the exhaust gases. A stoichiometric mixture is basically an explosive mixture, so that the combustion process can be very noisy. It has been found that a converging entry to the burner tube, as called for in the final paragraph of amended claim 1, reduces this combustion noise to acceptable levels.

The heating boiler can furthermore have a very simple design in that the means for delivering a mixture of fuel and combustion air to the lower portion of the burner tube comprises a second bottom closure member mounted in axially spaced relation below the first bottom closure member and that the fuel nozzle is mounted coaxially on an upper surface of the second bottom closure member, the space between the second bottom closure member and the first bottom member forming an annular passage for directing radial inflow of fresh combustion air toward the nozzle for mixture with fuel injected through the nozzle.

The efficiency of the boiler can be increased by providing means for delivering a mixture of fuel and combustion air to the lower portion of the burner tube further comprises an air supply jacket coaxially surrounding and radially spaced from the flue gas discharge jacket and having a lower end sealingly connected to the second bottom closure member, the space between the air supply jacket and the flue gas discharge jacket providing an annular preheating passage for downward flowing combustion air, the lower end of said preheating passage communicating with the space between the condensate trough and the second closure member.

A further easy assembly is obtainable when the means for guiding combusted fuel and air from the burner ports to the space between the enclosure and the flue gas discharge jacket comprises an inner bush disposed coaxially and closely adjacent to the inner side of the helical water tube, at least a portion of the inner bush being helically corrugated to correspond with adjacent helical coils of the water tube, the inner bush having a lower end supported on the condensate trough and an upper end that substantially sealingly contacts the outer periphery of the burner tube adjacent to the upper end of the lower portion of the burner tube, such that combusted gas from the burner parts are directed by said inner bush to flow downwardly past the helical coils of the water tube.

It will be clear that a great many variants are possible within the scope of the invention. For instance, the flat and corrugated discs, together bounding the burner ports, may have a round as well as a polygonal design. Besides, the helical tube destined for water may both be smooth and finned.

For the sake of completion, it is observed that DE—A—1 964 178 (VIGNES) discloses a gas burner with stacked alternately flat and radially corrugated annular discs. This radiant gas burner (i.e. in such a burner the flame is situated close to the ports, as a result of which the burner tube glows) is, however, of the type in which there is a partial premixing of fuel with a less than stoichiometric amount of primary air prior to entry into the burner ports. Additional secondary air is supplied to a plenum surrounding the flame side of the burner openings. The burner of VIGNES is a hollow cylinder, and the burner ports are characterized by metal passages having an inlet cross section smaller than the outlet cross section. According to VIGNES, a burner of such construction makes flame flashback impossible and is highly effective in retaining the flames at the outlets of the passages.

It is further known per se from the English magazine "British Gas", Volume 44, No. 313 of July/August 1980 to make a horizontal burner wherein the burner ports are formed by alternately arranged flat and corrugated strips. That arrangement does not change the burner port's cross-section and does not realize the effect obtained with the present invention, i.e. a slighter chance of flame flashback or flame blow-off.

One embodiment of the heating boiler according to the present invention will now be described, by way of example, with reference to the accompanying drawing, in which:

Fig. 1 is a diagrammatic longitudinal section of a heating boiler,

Fig. 2 a cross-section on the line II—II of Fig. 1 and

Fig. 3 shows a different embodiment of the injector.

As shown in the drawing, a heating boiler is indicated in its entirety at 1 and provided with a burner tube 2. Around the burner tube there is arranged a finned helical tube 3 having a water inlet end 4 extending outwardly from the boiler and a water outlet end 5. The helical tube is enclosed between a threaded bush 6 and a partly correspondingly threaded bush 7. The inner bush 6 is supported on the lower closed portion 19 of the burner tube 2 and on the other end on the inner edge of a condensate discharge trough 8, which is fitted with a discharge tube 9. The annular trough is provided on the inside with a conical portion 10, which is fixedly connected to the lower end of the burner tube 2. The space 20 underneath the condensate trough and the burner tube is shut off by a bottom plate 11 wherein an injector 12 is arranged centrally. As furthermore shown in the drawing, there is provided around the partly threaded outer bush 7 a jacket 13 which is shut off at the top by an insulating plate 14 retained by means of a plate 15.

Outwardly of the jacket 13 there are spaced apart two jackets 16, 17, between which two jackets air can be supplied which is in communication through an opening 18 adjacent the condensate discharge trough 8 with the space 20 bounded by the bottom plate for supply of primary air to the injector.

The space 21 between the jackets 13 and 16, through which the flue gas discharge takes place, as well as the space 22 between the jacket 16 and 17, through which the supply of primary air takes place, is accurately maintained, since a plurality of stiffening baffles, not further indicated, are provided between the jackets.

The burner tube 2 comprises substantially the lower portion 19 closed all around and an upper portion having burner ports. The portion comprising burner ports essentially consists of a plurality of alternately arranged flat and corrugated plates 22, 24. These plates are kept together by means of a top disc 25, which is connected by means of a centrally arranged bolt 26 to a cross-piece 27, the conical outer sides of which are supported on the correspondingly internally conical top end 28 of the closed tubular portion 19 of the burner tube.

The construction above described has a great many advantages:

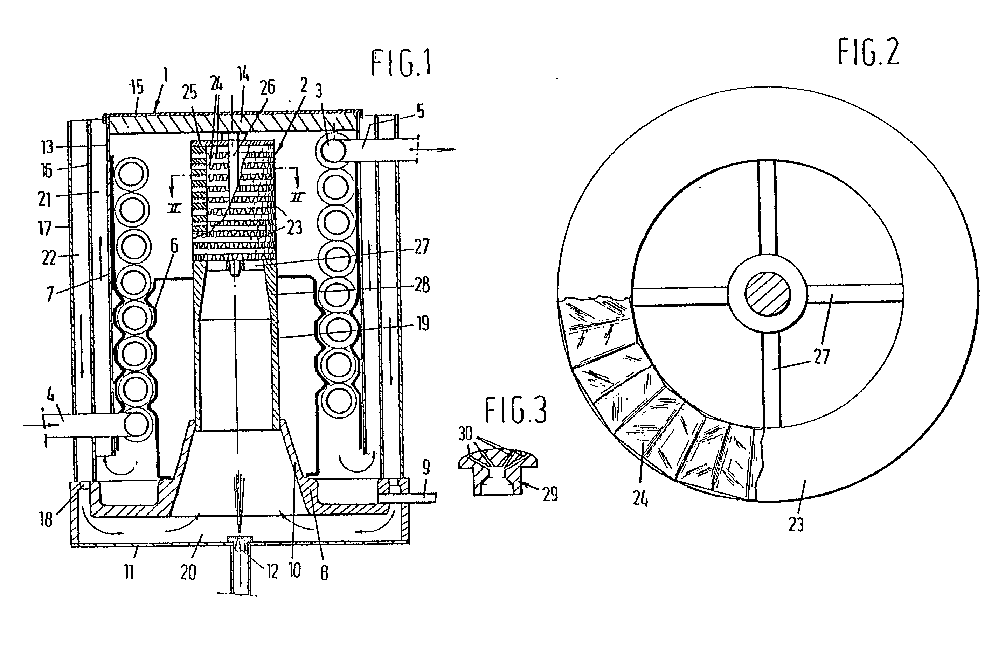

For instance, no separate mixing tube is necessary, since partly due to the resistance by the flat and corrugated rings, a proper mixing is effected, so that a proper flame distribution is produced. The resulting conical burner ports result in that the chance of flame flashback or flame blow-off is considerably reduced. The apparatus has furthermore been found suitable for different types of natural gases, which become available under conditions deviating from each other in respect of production and assembly, so that the cost going therewith can be minimized. It has for instance been found that through application of the injector 29, as shown in Fig. 3, a still better mixing is obtained. The injector 29 contains a plurality of openings 30, which ensure a radial

outflow or injection of the gas supplied. Naturally, also combinations of the injectors 12 and 29, respectively, shown in Figs. 2 and 3 are possible.

## Claims

1. A heating boiler (1) having a vertical axis and including, arranged concentrically with said axis, a completely premixing gas burner tube (2) having a lower circumferentially closed premixing portion (19), with an upper end and a lower end, and an upper portion provided with a plurality of burner ports extending through the tube wall, with inlets on the inside surface of the tube and outlets on the outside surface of the tube, the outside surface serving as a flame supporting surface; means for delivering a mixture of gaseous fuel and sufficient combustion air to burn the fuel completely to the lower portion of the burner tube; a helical water tube (3) surrounding the burner tube; an enclosure (13) surrounding the water tube and having a closed upper end (14, 15); a flue gas discharge jacket (16) surrounding and radially spaced from the enclosure; an annular bottom closure member (8) mounted underneath the helical water tube and sealingly connected to both the flue gas discharge jacket (16) and the lower portion of the burner tube; and means for guiding combusted fuel and air from the burner ports to the space between the enclosure and the flue gas discharge jacket, characterized by

the upper portion of the burner tube being an assembly of stacked alternately flat (23) and radially corrugated annular discs (24) forming said plurality of burner ports such that the inlet areas of said ports are smaller than the outlet areas, the discs having substantially equal inner and outer diameters, and the upper portion of the burner tube further including means (26, 27) for holding the stacked discs together and for attaching the stacked discs to the lower portion of the burner tube,

the annular bottom closure member (8) comprising a condensate trough having a drain outlet (9), a fuel nozzle (12) mounted below said annular bottom closure member (8); and

the connection (10) between the annular bottom closure (8) member and the lower portion of the burner tube (19) comprising an upwardly extending passage coaxial with the vertical axis and tapering inwardly toward the lower end of the lower portion of the burner tube.

2. A heating boiler according to claim 1, characterized in that the means for delivering a mixture of fuel and combustion air to the lower portion of the burner tube comprises a second bottom closure member (11) mounted in axially spaced relation below the first bottom closure member (8) and that the fuel nozzle (12) is mounted coaxially on an upper surface of the second bottom closure member, the space between the second bottom closure member and the first bottom member forming an annular passage for directing radial inflow of fresh combustion air toward the nozzle for mixture with fuel injected through the nozzle.

3. A heating boiler according to claim 1 or 2, characterized in that the means for delivering a mixture of fuel and combustion air to the lower portion of the burner tube further comprises an air supply jacket (17) coaxially surrounding and radially spaced from the flue gas discharge jacket (21) and having a lower end sealingly connected to the second bottom closure member (11), the space between the air supply jacket and the flue gas discharge jacket providing an annular preheating passage for downward flowing combustion air, the lower end of said preheating passage communicating with the space between the condensate trough and the second closure member (11).

4. A heating boiler according to claim 1, 2 or 3, characterized in that the means for guiding combusted fuel and air from the burner ports to the space between the enclosure (13) and the flue gas discharge jacket (20) comprises an inner bush (6) disposed coaxially and closely adjacent to the inner side of the helical water tube (3), at least a portion of the inner bush (6) being helically corrugated to correspond with. adjacent helical coils of the water tube (3), the inner bush having a lower end supported on the condensate trough and an upper end that substantially sealingly contacts the outer periphery of the burner tube (2) adjacent to the upper end of the lower portion (19) of the burner tube, such that combusted gas from the burner ports are directed by said inner bush to flow downwardly past the helical coils of the water tube.

5. A heating boiler according to claim 4, characterized by an outer bush (7) disposed coaxially and closely adjacent to the outer side of the helical water tube (3).

## Patentansprüche

1. Heizkessel (1) mit einer senkrechten Achse, welcher aufweist: ein konzentrisch mit der Achse angeordnetes Brennrohr (2) zur vollständigen Vormischung mit einem unteren, in seinem Umfang geschlossenen Vormischabschnitt (19), mit einem oberen Ende und einem unteren Ende, und einem oberen Abschnitt, versehen mit einer Vielzahl von durch die Rohrwand verlaufenden Brenneröffnungen, und mit Einlässen an der inneren Oberfläche des Rohres und Auslässen an der äußeren Oberfläche des Rohres, wobei die äußere Oberfläche als Flammenstützfläche dient; eine Einrichtung zum Versorgen des unteren Abschnitts des Brennrohrs mit einer Mischung aus gasförmigem Brennstoff und ausreichender Verbrennungsluft, um den Brennstoff vollständig zu verbrennen; ein spiralförmiges Wasserrohr (3), welches das Brennrohr umgibt; eine das Wasserrohr umschließende Ummantelung (13) mit einem geschlossenen oberen Ende (14, 15); einen Abgasabführmantel (16), welcher die Ummantelung umschließt und von ihr radial versetzt ist; ein unterhalb des spiralförmigen Wasserrohrs befestigtes ringförmiges unteres Abschlußelement (8), das mit dem Abgasabführmantel (16) und dem unteren Abschnitt des Brennrohrs beide abdichtend verbunden ist; und eine Einrichtung zum Führen des verbrannten Brennstoffs und der Luft aus den Brenneröffnungen in den Raum zwischen der Ummantelung und dem Abgasabführmantel,

dadurch gekennzeichnet, daß der obere Abschnitt des Brennrohrs aus einer Anordnung von abwechselnd gestapelten flachen (23) und radial gewellten Ringscheiben (24) besteht, welche die Vielzahl von Brenneröffnungen bilden, derart, daß die Einlaßflächen der Öffnungen kleiner sind als die Auslaßflächen, wobei die Scheiben im wesentlichen den gleichen Innen- und Außendurchmesser aufweisen, und der obere Abschnitt des Brennrohrs ferner eine Einrichtung (26, 27) zum Zusammenhalten der gestapelten Scheiben und zur Befestigung der gestapelten Scheiben an dem unteren Abschnitt des Brennrohrs aufweist;

das ringförmige untere Abschlußelement (8) eine Kondensatrinne mit einem Abflußauslaß (9) und einer unterhalb des ringförmigen Abschlußelements (8) befestigten Brennstoffdüse (12) aufweist; und

die Verbindung (10) zwischen dem ringförmigen unteren Abschlußelement (8) und dem unteren Abschnitt des Brennrohrs (19) eine zu der senkrechten Achse koaxial und in Richtung des unteren Endes des unteren Abschnitts des Brennrohrs nach innen sich verengende und nach oben verlaufende Passage aufweist.

2. Heizkessel nach Anspruch 1, dadurch gekennzeichnet, daß die Einrichtung zum Versorgen des unteren Abschnitts des Brennrohrs mit einer Mischung aus Brennstoff und Verbrennungsluft ein zweites axial versetztes, unterhalb des ersten unteren Abschlußelements (8) befestigtes unteres Abschlußelement (11) aufweist und daß die Brennstoffdüse (12) koaxial auf einer oberen Oberfläche des zweiten unteren Abschlußelementes angeordnet ist, wobei der Raum zwischen dem zweiten unteren Abschlußelement und dem ersten unteren Element eine ringförmige Passage zur Führung der radialen Einströmung von frischer Verbrennungsluft in Richtung der Düse bildet, und zwar zum Mischen mit dem durch die Düse eingespritzten Brennstoff.

3. Heizkessel nach Anspruch 1 oder 2, dadurch gekennzeichnet, daß die Einrichtung zum Versorgen des unteren Abschnitts des Brennrohrs mit einer Mischung aus Brennstoff und Verbrennungsluft ferner einen Luftversorgungsmantel (17) aufweist, welcher den Abgasabführmantel (21) koaxial umschließt und von ihm radialversetzt ist und mit dem zweiten unteren Abschlußelement (11) an seinem unteren Ende abdichtend verbunden ist, wobei der Raum zwischen dem Luftversorgungsmantel und dem Abgasabführmantel eine ringförmige Vorwärme-Passage für nach unten strömende Verbrennungsluft bildet, und das untere Ende der Vorwärme-Passage mit dem Raum zwischen der Kondensatrinne und dem zweiten Abschlußelement (11) kommuniziert.

4. Heizkessel nach Anspruch 1, 2 oder 3, dadurch gekennzeichnet, daß die Einrichtung zum Führen des verbrannten Brennstoffs und der Luft aus den Brenneröffnungen in den Raum zwischen der Ummantelung (13) und dem Abgasabführmantel (20) eine koaxial angeordnete und zu der Innenseite des spiralförmigen Wasserrohrs (3) eng benachbarte Innenbuchse (6) aufweist, wobei mindestens ein Abschnitt der Innenbuchse (6) entsprechend den benachbarten spiralförmigen Windungen des Wasserrohrs (3) spiralförmig gewellt ist, und wobei die Innenbuchse ein an der Kondensatrinne abgestütztes unteres Ende und ein oberes Ende aufweist, das, im wesentlichen abdichtend, den äußeren Umfang des Brennrohrs (2) in der Nähe des oberen Endes des unteren Abschnitts (19) des Brennrohrs berührt, derart, daß die verbrannten Gase aus den Brenneröffnungen durch die Innenbuchse nach unten über die spiralförmigen Windungen des Wasserrohrs geführt werden.

5. Heizkessel nach Anspruch 4, gekennzeichnet durch eine Außenbuchse (7), die koaxial und eng benachbart an der Außenseite des spiralförmigen Wasserrohrs (3) angeordnet ist.

**Revendications**

1. Chaudière (1) ayant un axe vertical et comprenant, disposé concentriquement à cet axe, un tube (2) de brûleur à gaz à pré-mélange total ayant une partie inférieure de pré-mélange fermée circonférentiellement, avec une extrémité supérieure et une extrémité inférieure, et une partie supérieure munie d'une pluralité d'orifices de brûleur s'étendant à travers la paroi du tube, avec des ouvertures d'entrée sur la face intérieure du tube et des ouvertures de sortie sur la face extérieure du tube, la face extérieure servant de surface supportant la flamme; des moyens pour fournir à la partie inférieure du tube brûleur un mélange d'un combustible gazeux et d'air de combustion en quantité suffisante pour brûler complétement le combustible; un tube d'eau (3) hélicoïdal entourant le tube de brûleur; une enveloppe (13) entourant le tube d'eau et ayant une extrémité supérieure fermée (14, 15); une chemise (16) d'évacuation des gaz de combustion entourant ladite enveloppe dont elle est espacée en sens radial; un organe annulaire (8) de fermeture du fond monté en dessous du tube hélicoïdal d'eau et raccordé hermétiquement à la fois à la chemise (16) d'évacuation des gaz de combustion et à la partie inférieure du tube de brûleur; et des moyens pour guider le combustible en cours de combustion et l'air à partir des orifices du brûleur jusqu'à l'espace situé entre l'enveloppe et la chemise d'évacuation des gaz de combustion, caractérisé par:

la partie supérieure du tube de brûleur constituée par un ensemble de disques empilés alternativement plats (23) et annulaires ondulés radialement (24) composant ladite pluralité des orifices de brûleurs de telle sorte que les aires d'admission de ces orifices sont plus petites que les aires d'évacuation, les disques ayant substantiellement des diamètres intérieur et extérieur égaux, et la partie supérieure du tube de brûleur comprenant en plus des moyens (26, 27) pour tenir ensemble les disques empilés et pour la fixation des disques empilés à la partie inférieure du tube de brûleur,

l'organe annulaire inférieur de fermeture (8) comprenant une cuvette des condensats ayant une ouverture de vidange (9), une buse (12) de combustible montée en dessous dudit organe annulaire inférieur de fermeture (8); et

le raccord (10) entre l'organe annulaire de fermeture (8) et la partie inférieure du tube de brûleur (19) comprenant un passage s'étendant vers le haut coaxialement à l'axe vertical et se resserrant intérieurement en direction de l'extrémité inférieure de la partie inférieure du tube de brûleur.

2. Chaudière selon la revendication 1, caractérisée en ce que les moyens pour fournir un mélange de combustible et d'air de combustion à la partie inférieure du tube de brûleur comprennent un second organe inférieur de fermeture (11) monté avec un intervalle en sens axial en dessous du premier organe inférieur de fermeture (8) et la buse de combustible (12) est montée coaxialement sur une surface supérieure du second organe inférieur de fermeture, l'intervalle entre ce dernier organe et le premier organe inférieur constituant un passage annulaire pour diriger en sens radial un courant d'arrivée d'air frais de combustion en direction de la buse pour son mélange avec le combustible injecté à travers la buse.

3. Chaudière les revendications 1 ou 2, caractérisée en ce que les moyens pour fournir un mélange de combustible et d'air de combustion à la partie inférieure du tube de brûleur comprennent en plus un manchon de fourniture d'air (17) entourant coaxialement et espacé radialement de la chemise d'évacuation des gaz de combustion (16) et ayant une extrémité inférieure raccordée hermétiquement au second organe inférieur de fermeture (11), l'espace entre le manchon de fourniture d'air et la chemise d'évacuation des gaz de combustion constituant un passage annulaire de préchauffage pour l'air de combustion circulant vers le bas, l'extrémité inférieure de ce passage de préchauffage communiquant avec l'intervalle existant entre la cuvette des condensats et le second organe de fermeture (11).

4. Chaudière selon les revendications 1, 2 ou 3, caractérisée en ce que les moyens pour guider le combustible en cours de combustion et l'air à partir des orifices du brûleur jusqu'à l'espace existant entre l'enveloppe (13) et le chemise d'évacuation des gaz de combustion (16) comprennent une douille intérieure (6) disposée coaxialement au proche voisinage du côté intérieur du tube hélicoïdal d'eau (3), au moins une partie de la douille intérieure (6) étant ondulée hélicoïdalement pour correspondre avec les enroulements hélicoïdaux voisins du tube d'eau (3), la douille intérieure ayant une extrémité inférieure supportée par la cuvette de condensats et une extrémité supérieure qui vient en contact substantiellement étanche avec la périphérie extérieure du tube de brûleur (2) au voisinage de l'extrémité supérieure de la partie inférieure (19) de ce tube de brûleur, de sorte que les gaz en cours de combustion provenant des orifices du brûleur sont dirigés par ladite douille intérieure pour circuler vers le bas au-delà des enroulements hélicoïdaux du tube d'eau.

5. Brûleur selon la revendication 4, caractérisé par une douille extérieure (7) disposée coaxialement au proche voisinage du côté extérieur du tube hélicoïdal d'eau (3).

FIG.2

FIG.3

FIG.1